# EUROPEAN PATENT APPLICATION

(11) **EP 2 503 498 A1**
(43) Date of publication of application: **26.09.2012**
(21) Application number: 11765688.4
(22) Date of filing: 30.03.2011
(51) Int. Cl.: G06Q 30/00, G06F 3/048

(54) **SERVER DEVICE, PRODUCT DISPLAY METHOD, PRODUCT DISPLAY PROGRAM, RECORDING MEDIUM UPON WHICH PRODUCT DISPLAY PROGRAM HAS BEEN RECORDED SO AS TO BE COMPUTER-READABLE, AND PRODUCT DISPLAY SYSTEM**

(30) Priority: 31.03.2010 JP 2010081993
(71) Applicant: Rakuten, Inc., Tokyo 140-0002 (JP)
(72) Inventor: OCHIAI Yukiko, Tokyo 140-0002 (JP)
(74) Representative: Price, Christopher
(86) International application number: PCT/JP2011/058112
(87) International publication number: WO 2011/125788

(57) **Abstract**

A server apparatus that a customer hardly forgets to order a product when the customer orders products is provided. Product display data that refers to a storing means that stores a plurality of belonged products that belong to a product group so as to be associated with a group name for a plurality of product groups, extracts the product group to which the order scheduled products belong from the product groups stored in the storing unit whenever a user selects a predetermined number of order scheduled products that are scheduled to be ordered, and displays the belonged products and the group name for every extracted product group is transmitted to the terminal device.

## Description

### Technical Field

The present invention relates to technical fields of a server apparatus, a product display method, a product display program, a recording medium with a product display program recorded therein to be read by a computer, and a product display system.

### BACKGROUND ART

In recent years, a shopping site that opens a store on the Internet is known. A shopping mall user (user) selects a desired product among products presented by a shopping mall host on a shopping site through a Web page transmitted from the shopping site to a user terminal and orders the selected product through an order process (e.g., refer to Patent Literature 1).

### CITATION LIST

### PATENT LITERATURE

PTL 1: Japanese Patent Application Laid-Open No. 2002-236694

### SUMMARY OF THE INVENTION

### PROBLEM TO BE SOLVED BY THE INVENTION

However, in the above shopping mall site, if a customer orders a plurality of products, the customer may forget to order a product that should be ordered. Usually, when a customer shops, the customer selects an order product in consideration of an object or an intended purpose of the product. Therefore, if a product is forgotten to be ordered, the initial purpose cannot be achieved.

The present invention has been made in view of the above-problems, and an example of the object of the present invention is to provide a server apparatus, a product display method, a product display program, a recording medium with a product display program recorded therein to be read by a computer, and a product display system that is hard to forget to order a product when a user orders a product.

### MEANS FOR SOLVING THE PROBLEM

In order to solve the above problem, an invention described in claim 1 is a server apparatus that is connected to a terminal device via a network, the server apparatus comprising: a receiving means that, whenever a user selects a predetermined number of products that are scheduled to be ordered as an order scheduled product, receives order scheduled product information indicating the selected order scheduled product from the terminal device; an extracting means that refers to a storing means that stores a plurality of belonged products that belong to a product group so as to be associated with a group name for a plurality of product groups and extracts a product group to which the order scheduled products indicated by the received order scheduled product information belong from the product groups stored in the storing means; and a transmitting means that transmits product display data displaying the belonged products and the group name of the extracted product group to the terminal device.

According to the present invention, whenever the user selects a predetermined number of order scheduled products, a product that belongs to the product group to which the selected products belong may be displayed together with the name of the product group for every group. Accordingly, if another product that belongs to the product group is necessary, the possibility that the user may forget to order the product is lowered. Further, even though the user does not forget to order a product, when the user considers ordering another product that belongs to the product group, it is possible to prevent an inconvenience of searching for the products in order to place of an order the products individually. Here, the product refers to products that are traded in the market.

An invention described in claim 2 is the server apparatus according to claim 1, wherein the product display data is a data that displays a screen which allows a user to individually select the belonged products of the product group to be displayed by the product display data as the order scheduled products.

According to the present invention, since all the products do not need to be ordered in the unit of the product group, if necessary, the user selects the product to order.

An invention described in claim 3 is the server apparatus according to claim 1 or 2, wherein the storing means further stores user identification information that identifies the user so as to be associated with the product group, the receiving means receives the user identification information of a user who selects the order scheduled product indicated by the order scheduled product information from the terminal device, and the extracting means refers to the storing means and extracts the product group that is associated with the user identification information received by the receiving means.

According to the present invention, since the product groups are associated in accordance with the behavioral characteristics of the user, it is possible to suggest the products based on the product group in accordance with the behavioral characteristics of the user.

An invention described in claim 4 is the server apparatus according to claim 3, wherein the receiving means further receives user creation group information indicating the belonged products and the group name of the product group as the user creation group information concerning product group created by the user from the terminal device, and the server apparatus further comprises a group editing means that allows the product group created by the user, the belonged products that belong to the group, and the group name to be associated with the user identification information of the user and stores in the storing means, based on the user creation group information received by the receiving means.

According to the present invention, since the user creates the product group in accordance with the user's own behavioral characteristics in advance, it is possible to prevent from forgetting to order a product when a product corresponding to the product group is ordered.

An invention described in claim 5 is the server apparatus according to any one of claims 1 to 4, wherein when the plurality of product groups are extracted, the extracting means determines the display ranking of the groups in the order of groups having larger number of the belonged products that matches with the order scheduled products, and the product display data is data that preferentially displays the belonged products and the group name of the product group having higher display ranking.

It is considered that as the product group includes more order scheduled products, the products that belong to the product group are highly expected to be ordered by the user. According to the present invention, the product that is highly expected to be ordered by the user may be preferentially suggested, which improves the convenience of the user.

An invention described in claim 6 is the server apparatus according to any one of claims 1 to 5, wherein the product display data is data that displays the belonged products and the group name of a product group other than the product group whose all belonged products are selected as the order scheduled products.

According to the present invention, from the viewpoint of preventing from forgetting to order, the products that belong to a group which is not required to be suggested to the user do not need to be suggested, which improves visibility of the product selecting screen.

An invention described in claim 7 is the server apparatus according to any one of claims 1 to 6, wherein the product groups are product groups based on recipes.

According to the present invention, the possibility of forgetting to place of an order for products to be used for cooking is low, which prevents the disadvantage in that the user cannot cook because of forgetting to order products and thus the other materials are wasted. Specifically, many of cooking ingredients such as fresh produces have a limited or short shelf life. Therefore, if the purpose is not achieved, the cooking ingredients may be disposed before being used for the next time. Therefore, the present invention is very useful.

An invention described in claim 8 is the server apparatus according to any one of claims 1 to 7, wherein the products that are selected by the user as the order scheduled products are products which are handled in an Internet shopping mall.

In the Internet shopping mall, relatively cheap products such as fresh products are handled in large quantities, and a plurality of product groups which are related in terms of purpose and usage (for example, a recipe) may be ordered at one time. According to the present invention, the user may select a product while checking if there is a product that is not ordered among a group of products that belong to the product group.

An invention described in claim 9 is a product display method comprising: a step of, at a computer, whenever a user selects a predetermined number of order scheduled products that are scheduled to be ordered, receiving order scheduled product information indicating the selected order scheduled product from the terminal device connected via a network; a step of, at a computer, referring to a storing means that stores a plurality of belonged products that belong to a product group so as to be associated with a group name for a plurality of product groups and extract a product group to which the order scheduled products indicated by the received order scheduled product information from the product groups stored in the storing means; and a step of ,at a computer, transmitting product display data displaying the belonged products and the group name of the extracted product group to the terminal device.

An invention described in claim 10 is a product display program causing a computer to function as: a receiving means that, whenever a user selects a predetermined number of order scheduled products that are scheduled to be ordered, receives order scheduled product information indicating the selected order scheduled product from a terminal device connected via a network; an extracting means that refers to a storing means that stores a plurality of belonged products that belong to a product group so as to be associated with a group name for a plurality of product groups and extracts a product group to which the order scheduled products indicated by the received order scheduled product information belong from the product groups stored in the storing means; and a transmitting means that transmits product display data displaying the belonged products and the group name of the extracted product group to the terminal device.

An invention described in claim 11 is a recording medium with a computer-readable product display program recorded thereon which causes a computer to function as: a receiving means that, whenever a user selects a predetermined number of order scheduled products that are scheduled to be ordered, receives order scheduled product information indicating the selected order scheduled product from a terminal device connected via a network; an extracting means that refers to a storing means that stores a plurality of belonged products that belong to a product group so as to be associated with a group name for a plurality of product groups and extracts a product group to which the order scheduled products indicated by the received order scheduled product information belong from the product groups stored in the storing means; and a transmitting means that transmits product display data displaying the belonged products and the group name of the extracted product group to the terminal device.

An invention described in claim 12 is a product display system comprising: a terminal device; and a server apparatus connected with the terminal device via a network, wherein the server apparatus comprises: a receiving means that, whenever a user selects a predetermined number of products that are scheduled to be ordered as an order scheduled product, receives order scheduled product information indicating the selected order scheduled product from the terminal device; an extracting means that refers to a storing means that stores a plurality of belonged products that belong to a product group so as to be associated with a group name for a plurality of product groups and extracts a product group to which the order scheduled products indicated by the received order scheduled product information belong from the product groups stored in the storing means; and a transmitting means that transmits product display data displaying the belonged products and the group name of the extracted product group to the terminal device, and the terminal device comprises: an order scheduled product information transmitting means that transmits the order scheduled product information to the server apparatus whenever the user selects a predetermined number of order scheduled products; a product display data receiving means that receives the product display data from the server apparatus; and a displaying means that displays belonged products and the group name of the product group specified by the received product display data on a display unit.

### EFFECT OF THE INVENTION

Therefore, according to the present invention, whenever the user selects a predetermined number of order scheduled products, a product that belongs to the same product group as the selected product may be displayed together with the name of the product group for every group. Accordingly, the possibility that the user may forget to order the product may be lowered.

### BRIEF DESCRIPTION OF THE DRAWINGS

FIG. 1 is a view illustrating an example of a configuration of an order receiving system according to the present embodiment.
FIG. 2 is a block diagram illustrating an example of a configuration of an order receiving server according to the present embodiment.
FIG. 3 is a view illustrating an example of contents registered in various databases.
FIG. 4 is a view for describing an example of registered content of a group DB according to the present embodiment.
Fig. 5 is a view illustrating an example of a product selecting screen.
Fig. 6 is a flowchart illustrating processing examples of an order reception server and a user terminal when a product selecting screen is displayed.

### MODES FOR CARRYING OUT THE INVENTION

Hereinafter, embodiments of the present invention will be described with reference to the drawings. In addition, an embodiment will be described below where the present invention is applied to an order receiving system.

### [1. Outline of Configuration and Function of Order Receiving System]

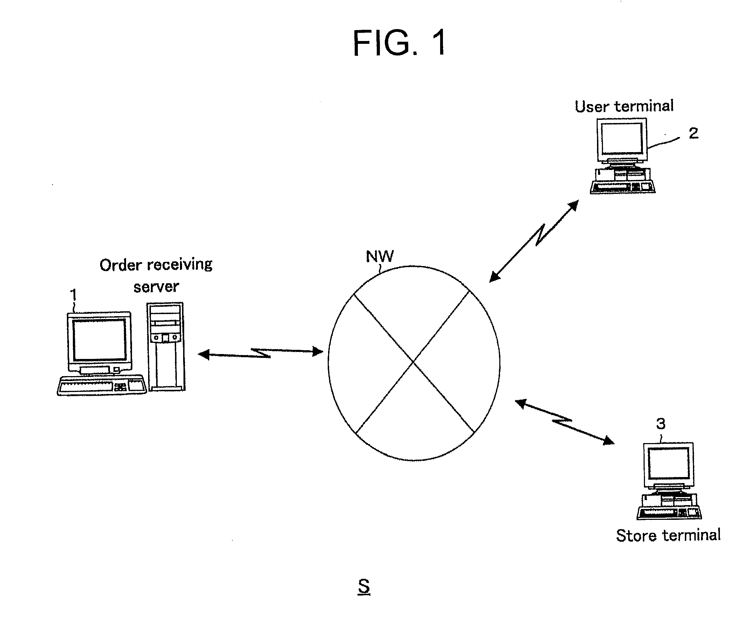

First, an outline of a configuration and a function of an order receiving system S according to an embodiment of the present invention will be described using FIG. 1.

As shown in Fig. 1, an order reception system S (an example of a "product display system") is configured as an online shopping site including an order reception server 1 (an example of a "server apparatus"), a user terminal 2 (an example of a "terminal device"), and a store terminal 3. In addition, although one user terminal 2 is illustrated with an example of FIG. 1 for ease of description, multiple user terminals can actually access the order receiving server 1. Similarly, the number of store terminals 3 also corresponds to the number of supermarkets which join an internet supermarket site or the number of branch stores. Meanwhile, an internet supermarket refers to home delivery service of receiving orders of products through an internet supermarket site provided on the Internet by existing supermarkets or operators who do not have stores and are specialized in delivery, and delivering order products to houses of orderers.

The order receiving server 1, the user terminal 2 and the store terminal 3 can transmit and receive data to and from each other using, for example, TCP/IP for a communication protocol through a network NW. In addition, the network NW is constructed with, for example, the Internet, a dedicated communication line (for example, CATV (Community Antenna Television) line), a mobile communication network (including, for example, base stations) and a gateway.

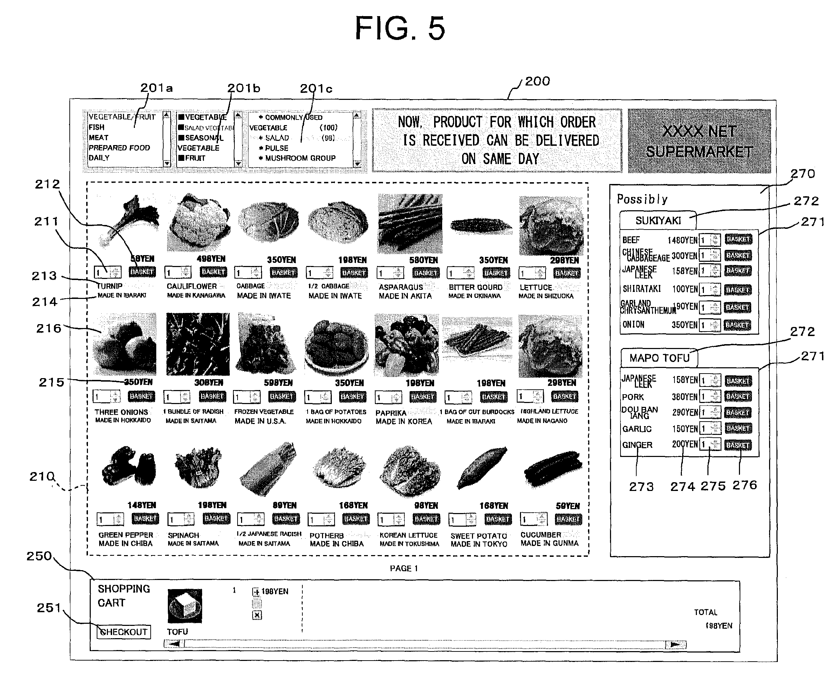

The order receiving server 1 is a server installed to operate an internet supermarket site in which a plurality of stores join, and receives orders of products from the user terminals 2 and enables store terminals 3 of specified stores to check an order content. Specifically, the order reception server 1 of the present embodiment has a function that shows the customer a product that belongs to the same group as the selected product among a plurality of groups configured by products to be simultaneously purchased whenever the customer selects an order product in the product selecting screen (Fig. 5).

The user terminal 2 has a web browser function, and transmits, for example, a HTTP (Hyper Text Transfer Protocol) request to the order receiving server 1 and acquires, for example, a web page as a response, and displays the web page on a display. The user of the user terminal 2 can use information providing service provided from an internet supermarket site or a seller site. Further, the user terminal 2 receives an e-mail (an example of an "electronic mail") transmitted to an address of the e-mail address of the user using an electronic mail client (including a web mail), and displays the e-mail on the display. In addition, to the user terminal 2, for example, a personal computer, a PDA (Personal Digital Assistant) or a mobile telephone is applicable.

Similar to the user terminal 2, the store terminal 3 has a web browser function, and transmits, for example, a HTTP (Hyper Text Transfer Protocol) request to the order receiving server 1 and acquires, for example, a web page as a response, and displays the web page on a display. Further, the store terminal 3 accesses the order receiving server 1, and displays order contents accumulated in the order receiving server 1 on the display. Accordingly, store staff can check an order placed on this store.

### [2. Configuration of Order Receiving Server 1]

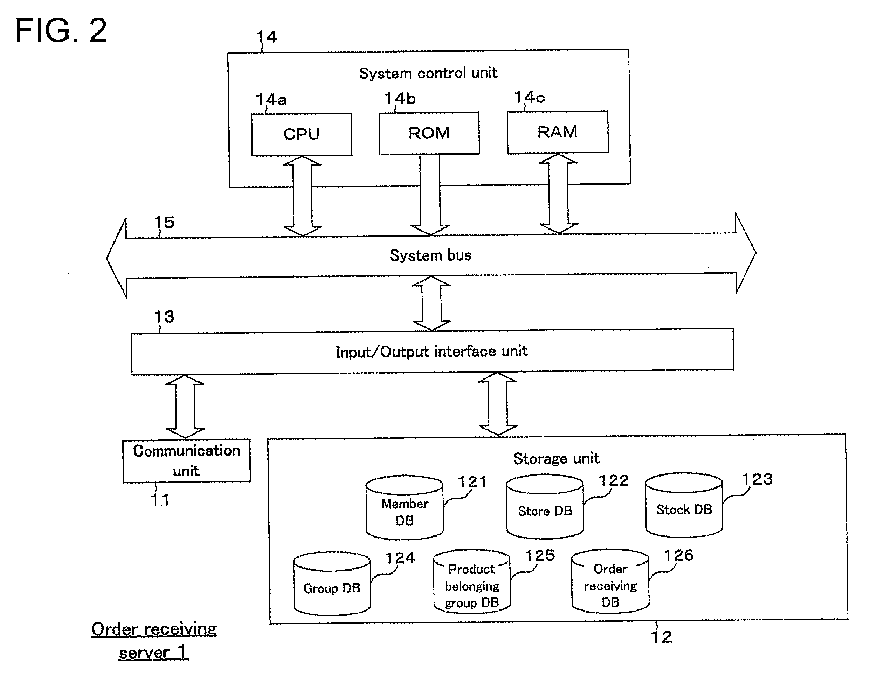

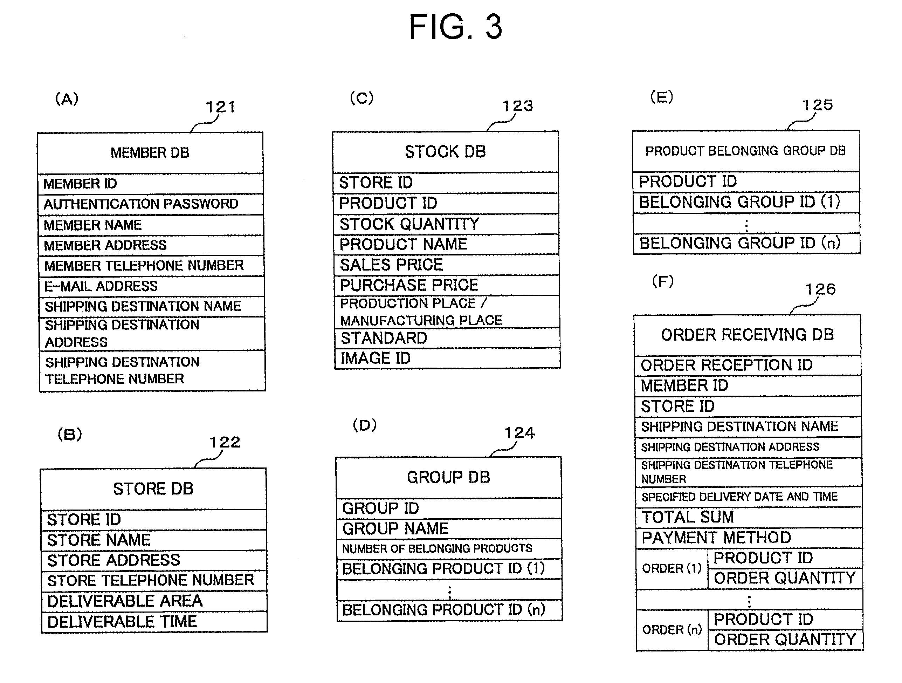

Next, a configuration of the order reception server 1 will be described with reference to Figs. 2 and 3.

As illustrated in FIG. 2, the order receiving server 1 has a communication unit 11, a storage unit 12, an input/output interface unit 13 and a system control unit 14. Further, the system control unit 14 and the input/output interface unit 13 are connected through a system bus 15.

The communication unit 11 connects to the network NW to control communication state with the user terminal 2 or the store terminal 3.

The storage unit 12 (an example of a "storing means") employs a configuration including, for example, a hard disc drive. In the storage unit 12, a member DB (data base) 121, a store DB 122, a stock DB 123, a group DB 124, a product belonging group DB 125, a member group DB 126, and an order reception DB 126 are built.

In the member DB 121 shown in Fig. 3A, member information indicating a member ID (an example of "user identification information"), an authentication password, a member name, a member address, a member phone number, an e-mail address, a delivery destination name, a delivery destination address, and a delivery destination phone number of a member registered as a member (who is a user of the Internet shopping mall and a customer of the product) is registered. Member information can be identified per member based on a member ID. Meanwhile, a member ID is an identifier for identifying a member. Further, a shipping destination is a delivery destination of a product purchased at an internet supermarket. Further, a member ID and an authentication password are log-in information used for log-in processing (authentication processing of a member).

In the store DB 122 illustrated in FIG. 3B, store information indicating, for example, a store ID, a store name, a store address, a store telephone number, a deliverable area and a deliverable time of a supermarket (including a branch store) listed as an internet supermarket is registered. As deliverable times, a plurality of time zones are registered. For example, "8 o'clock to 10 o'clock", "10 o'clock to 12 o'clock", "12 o'clock to 14 o'clock", ... and "18 o'clock to 20 o'clock" are registered as deliverable times. Store information can be identified per supermarket listed as an internet supermarket or per branch store based on a store ID. Meanwhile, a store ID is an identifier for identifying a listed store or a listed branch store.

In the stock DB 123 shown in Fig. 3C, a store ID, stock information indicating the number of stocks for every product ID of a product that is handled in the store identified by the store ID, or product information indicating a product name, a sales price, a purchase price, a producing place or manufacturing place, a standard, and an image ID is registered. The standard refers to, for example, the size or the volume of a product. A product ID is an identifier for identifying a product. The image ID refers to an identifier for identifying a product image. The product image is registered so as to associate the image ID with an image DB which is not shown. Stock information registered in the stock DB 123 is appropriately updated based on information received from the store terminal 3 installed at each store. Further, the stock DB 123 may be provided in a storage unit in the store terminal 3 installed at each store instead of in the order receiving server 1 to allow the order receiving server 1 to access the stock DB 123 in the store terminal 3.

In the group DB 124 shown in Fig. 3D (an example of "a storage unit that stores a product group so as to associate a plurality of belonged products belonging to the product group with the group name"), a group name, a number of belonged products, and a belonged product ID are registered for every group ID. The group that is identified by the group ID includes a plurality of products. The group name refers to a name assigned to the group. The number of belonged products refers to the number of products that belong to the group. The belonged product ID refers to a product ID of the product that belongs to the group. Since a plurality of products belong to a group, product IDs of the products are registered as a belonged product ID (1), ..., a belonged product ID (n).

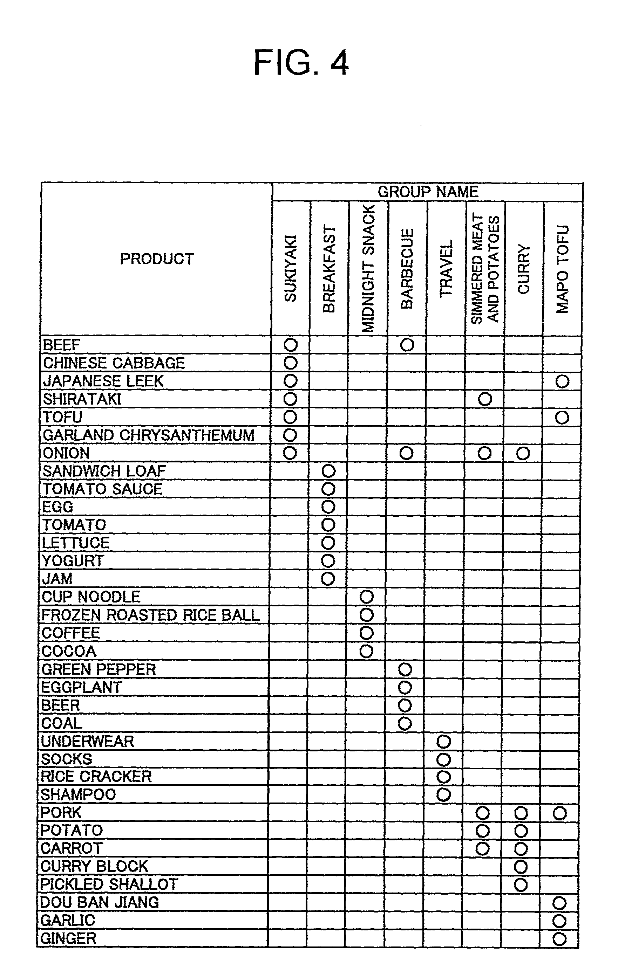

Here, a registration example of the group DB 124 will be described with reference to Fig. 4. In Fig. 4, as an example of a group, a "sukiyaki" group, a "breakfast" group, and a "midnight snack" group are shown. For example, products that belong to the "midnight snack" group include a cup noodle, a frozen roasted rice ball, a cup of coffee, and a cup of cocoa. In this case, in the group DB 124, for the "midnight snack" group, the "midnight snack" is registered as the group name. Further, the product IDs corresponding to the cup noodle, the frozen roasted rice ball, a cup of coffee, and a cup of cocoa are registered as belonged product IDs (1) to (4), respectively and "4" is registered as the number of belonged products. As described above, in each of the groups registered in the group DB 124, a plurality of products which may be simultaneously purchased are registered.

Further, as known from "onion" which belongs to the "sukiyaki" group, a "barbeque" group, a "simmered meat and potatoes) " group, and a "curry" group, one product may belong to a plurality of groups.

In the product belonging group DB 125 illustrated in FIG. 3E, a group ID ("belonging group ID") of a group (an example of a "product group") to which a product identified based on a product ID belongs is registered per product ID. When one product belongs to a plurality of groups, respective group IDs are registered as belonging group ID(1), ... and a belonging group ID(n). In addition, in the product belonging group DB 125, product IDs of the products which do not belong to any group are not registered.

In the order receiving DB 126 illustrated in FIG. 3F, a member ID of a member who orders products, a store ID of an order store, a shipping destination name, a shipping destination address, a shipping destination telephone number, a specified delivery date and time, a total amount, a payment method, and an order (1) {product ID and order quantity}, ... and an order (n) {product ID and order quantity} are registered per order reception ID. In addition, the product ID of the order (1) is a product ID of a first order product, and the order quantity of the order (1) is an order quantity of the first order product.

Further, the storage unit 12 stores, for example, various HTML (Hyper Text Markup Language) documents configuring web pages of shopping sites, image data, sound data and text data.

Furthermore, the storage unit 12 stores various programs. More specifically, the storage unit 12 stores, for example, a predetermined OS (Operating System), a WWW (World Wide Web) server program and a shopping processing program. The WWW server program is a program of transmitting web pages to, for example, the user terminal 2 based on various items of data stored in the storage unit 12 according to a request transmitted from, for example, the user terminal 2, using a HTTP (Hyper Text Transfer Protocol) protocol. The shopping processing program is a program of performing processing of searching for and purchasing a product at a shopping site. In addition, various programs may be acquired from, for example, other server apparatus or the like through the network NW, or may be recorded in a disc DK such as a CD-ROM and read through a drive unit.

The input/output interface unit 13 performs interface processing between the communication unit 11 and the storage unit 12, and the system control unit 14.

The system control unit 14 has, for example, a CPU (Central Processing Unit) 14a, a ROM (Read Only Memory) 14b and a RAM (Random Access Memory) 14c. Further, when the CPU 14a reads and executes various programs stored in the ROM 14b and the storage unit 12, the system control unit 14 functions as a receiving means, an extracting means, a transmitting means or the like.

In addition, the order receiving server 1 may employ a configuration including, for example, a plurality of server apparatuses such as a server which manages various databases, a search processing server which performs search processing of products and a WWW server which provides various pieces of information.

### [3. Product selecting screen]

Next, when the user selects an order product, a product selecting screen displayed on a display of the user terminal 2 will be described with reference to Fig. 5.

First, flows until the product selecting screen is displayed will be briefly described. The system controller 14 of the order reception server 1 performs login processing based on the member ID and the authentication password that are transmitted from the user terminal 2. When the login processing is successfully completed, the system controller 14 creates a Web page for a product selecting screen and transmits the Web page to the user terminal 2. When the user terminal 2 receives Web page for a product selecting screen, the user terminal 2 displays the product selecting screen 200 on the display based on the Web page for a product selecting screen.

As shown in Fig. 5, in a selectable product display area 210 of the product selecting screen 200, a product that is selectable by a user, that is, a product that can be registered in a shopping cart 250 is displayed. Further, in the selectable product display area 210, an ordering quantity selecting box 211 that is used when the ordering quantity of the products is selected for every product, a shopping cart button 212 that is used when a product is added in the shopping cart, a product name 213, a production place of a product 214, a product price (corresponding to a sales price of the stock DB 123) 215, and a product image 216 are displayed. A product for which the shopping cart button 212 is pressed (clicked) is registered in the shopping cart 250 with an ordering quantity that is displayed in the ordering quantity selecting box 211. Further, an accounting button 251 that is used when the products registered in the shopping cart 250 are accounted is provided in the shopping cart 250. When the accounting button 251 is pressed (clicked), the screen is transited to an accounting screen (not shown).

Further, above the selectable product display area 210, a large category selection area 201a, a medium category selection area 201b, and a small category selection area 201c that are used in order to narrow the range of the products to be displayed on the selectable product display area 210 are provided. The user selects a category to which a product to be displayed in the selectable product display area 210 belongs in the order of the large category, the medium category, and the small category to narrow the range of the products which will be a display target.

Below the selectable product display area 210, the shopping cart 250 is provided. In the shopping cart 250, a name, an ordering quantity, a sales price of each product corresponding to the shopping cart button 212 that the user pressed, and a total sales price of selected products are displayed.

At the right of the selectable product display area 210, a related product area 270 is provided. In the related product area 270, a product that is highly expected to be purchased simultaneously with a product registered in the shopping cart 250 is presented. The product that is highly expected to be purchased simultaneously with a product registered in the shopping cart 250 refers to a product that belongs to the same group as the product registered in the shopping cart 250.

As shown in Fig. 5, in the related product area 270, a group product display area 271 is displayed. In the group product display area 271, as products belonging to the same group as the product registered in the shopping cart 250 (referred to as registered product"), a list of products that does not include the registered product is displayed. If the registered product belongs to a plurality of groups, a group product display area 271 is displayed for every group. In this case, as the display rank of a group is higher, the group is displayed at the upper side of the screen so as to be noticeable by a customer. Further, above the group product display area 271, a name 272 of the group to which the product displayed in the group product display area 271 belongs is displayed.

In the group product display area 271, a product name 273, a sales price 274, an ordering quantity selection box 275, and a shopping cart button 276 for every product are displayed. The user appropriately manipulates the ordering quantity selection box 275 and the shopping cart button 276 to register the product in the shopping cart 250. In the group product display area 271, all product purchasing buttons to purchase all products that are displayed in the group product display area 271, for example, one by one may be disposed.

In a state where no product is registered in the shopping cart 250, nothing is displayed in the related product area 270 or the related product area 270 is not displayed.

### [Operation of order reception server 1]

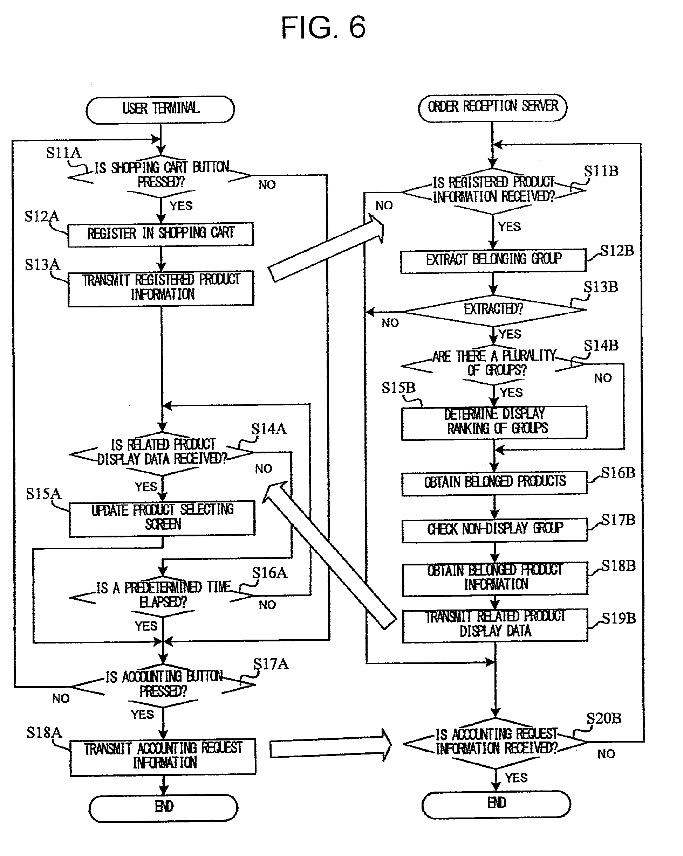

Referring to Fig. 6, operations of the order reception server 1 and the user terminal 2 when the product selecting screen 200 is displayed on the display of the user terminal 2 will be described.

As shown in Fig. 6, when the product selecting screen 200 is displayed based on the Web page for the product selecting screen, the user terminal 2 (specifically, a system controller of the user terminal 2) determines whether any one of shopping cart buttons 212 is pressed (clicked) (step S11A). If it is determined that the shopping cart button 212 is not pressed (clicked) (step S11A: NO), the user terminal 2 proceeds to the processing of step S17A. In contrast, if it is determined that the shopping cart button 212 is pressed (clicked) (step S11A: YES), the user terminal 2 registers a product corresponding to the pressed (clicked) shopping cart button 212 in the shopping cart 250 (step S12A). Continuously, the user terminal 2 transmits registered product information (at least the product ID is included) concerning the product registered in the shopping cart 250 to the order reception server 1 (step S13A).

On the contrary, a system controller 14 of the order reception server 1 determines whether the registered product information is received after transmitting the Web page of the product selecting screen (step S11B). If it is determined that the registered product information is not received (step S11B: NO), the system controller 14 proceeds to the processing of step S20B. In contrast, if it is determined that the registered product information is received (step S11B: YES), the system controller 14 extracts a belonging group (step S12B). Specifically, the system controller 14 refers to the product belonging DB 125 based on the product ID included in the received registered product information and obtains a belonging group ID of a group to which the product specified by the product ID belongs.

Continuously, the system controller 14 determines whether the belonging group can be extracted (step S13B). If it is determined that the belonging group cannot be extracted, that is, the product ID included in the registered product information is not registered in the product belonging DB 125 (step S13B: NO), the system controller 14 proceeds to the processing of step S20B. In the meantime, if it is determined that the belonging group can be extracted (step S13B: YES), the system controller 14 determines whether the number of extracted belonging groups is plural (step S14B). Here, the number of extracted belonging groups refers to the number of belonging groups extracted by the processing of step S12B after displaying the product selecting screen in the user terminal 2. However, the number of groups that is not determined to be displayed in the processing of step S17B which will be described below is not counted.

If it is determined that the number of extracted belonging groups is not plural (step S14B: NO), the system controller 14 proceeds to the processing of step S16B. In contrast, if it is determined that the number of extracted belonging groups is plural (step S14B: YES), the system controller 14 ranks the display ranking of the belonging groups (step S15B). Specifically, the system controller 14 refers to the group DB 124 based on the group ID (belonging group ID) of the extracted belonging group and obtains all belonged product IDs for every belonging group. Then, the system controller 14 compares the belonged product ID with the product IDs of all products that are registered in the shopping cart 250 at that time and ranks the belonging groups so that the rank of the belonging group having a larger number of belonged product IDs that match with the product IDs is higher. Further, if plural belonging groups have the same number of belonged product IDs that match with the product ID, the ranking is determined in accordance with a predetermined rule (for example, an ascending order of the group IDs). Further, a higher display ranking group is displayed above the related product area 270 so as to be noticeable by the consumer.

Continuously, the system controller 14 obtains the belonged product (step S16B). Specifically, the system controller 14 refers to the group DB 124 based on the group ID (belonging group ID) of the extracted belonging group and obtains all belonged product IDs for every belonging group. However, if the belonged product ID is obtained in the processing of step S15B, the processing of step S15B may be omitted.

Continuously, the system controller 14 checks a non-display group (step S17B). Specifically, the system controller 14 checks whether a group in which all belonged products have been registered in the shopping cart 250 is included in any of the groups extracted in the processing of step S12B. The group in which all belonged products have been registered in the shopping cart 250 may not be a target of subsequent processings so that the group is not displayed in the related product area 270 (that is, becomes a non-display group).

Continuously, the system controller 14 specifies a belonged product not to be displayed for every group extracted in the processing of step S12B and obtains the product information (step S18B). Specifically, in the processing of step S16B (or processing of step S15B), the system controller 14 removes a product ID of a product that has been already registered in the shopping cart 250 at that timing from the displaying target to limit the product ID of the belonged product to be displayed from the belonged product ID obtained for every group. The system controller 14 refers to the stock DB 124 based on the product ID of the belonged product to be displayed to obtain product information (belonged product information) such as sales price.

Continuously, the system controller 14 creates related product display data (an example of "product display data") based on the belonged product information and the ranking information (only when the processing of step S15B is performed) and transmits the related product display data to the user terminal 2 (step S19B). The related product display data is data for updating the display of the related product area 270.

On the contrary, after the registered product information is transmitted in the processing of step S13A, the user terminal 2 receives the related product display data from the order reception server 1 (step S14A) or waits (step S14A: NO, step S16A: NO) until a predetermined time elapses after the registered product information is transmitted (step S16A). The predetermined time is a time obtained by adding a time required to transmit and receive the registered product information and the related product display data between the user terminal 2 and the order reception server 1, a time required until the processing of step S19B is performed after the order reception server 1 receives the registered product information (step S11B), and a predetermined surplus time.

If it is determined that the related product display data is received from the order reception server 1 (step S14A: YES), the user terminal 2 updates the related product area 270 of the product selecting screen 200 based on the received related product display data (step S15A) and proceeds to the processing of step S17A. Further, if it is determined that the predetermined time elapses after transmitting the registered product information (step S16A: YES), the user terminal 2 proceeds to the processing of step S17A.

If it is determined that the shopping cart button 212 is not pressed (clicked) in the processing of step S11A (step S 11A: NO), when the processing of step S15A is completed or it is determined that the predetermined time elapses in the processing of step S16A (step S16A: YES), the user terminal 2 determines whether the accounting button 251 is pressed (clicked) (step S17A). If it is determined that the accounting button 251 is not pressed (clicked) (step S17A: NO), the user terminal 2 proceeds to the processing of step S11A. In contrast, if it is determined that the accounting button 251 is pressed (clicked) (step S17A: YES), the user terminal 2 transmits accounting request information to the order reception server 1 (step S18A) and completes the processings in the flowchart.

On the contrary, if it is determined that the registered product information is not received in the processing of step S11B (step S11B: NO) or when the processing of step S19B is completed, the system controller 14 of the order reception server 1 determines whether the accounting request information is received (step S20B). If it is determined that the accounting request information is not received (step S20B: NO), the system controller 14 proceeds to the processing of step S11B. In contrast, if it is determined that the accounting request information is received (step S20B: YES), the system controller 14 completes the processings in the flowchart.

Next, referring to the examples shown in Figs. 4 and 6, how to determine the product to be displayed in the group product display area 271 will be described with specific examples. Further, it is considered that only the groups shown in Fig. 4 are registered in the group DB 124 and only products shown in Fig. 4 are registered as products belonging to the groups.

First, it is considered that a shopping cart button 212 corresponding to "tofu" is pressed in a state where no product is registered in the shopping cart 250 of the product selecting screen 200. When the corresponding operation is detected (step S11A: YES), the user terminal 2 registers the "tofu" in the shopping cart 250 (step S12A) and transmits registered product information including a product ID of the "tofu" to the order reception server 1 (step S13A). If the registered product information is received (step S11B: YES), the system controller 14 of the order reception server 1 extracts a group to which the "tofu" belongs (step S12B). Here, since the group to which the "tofu" belongs includes the "sukiyaki" group and "mapo tofu (Chinese style fiery hot tofu)" group, as shown in Fig. 4, these two groups are extracted.

If the two groups are extracted, the system controller 14 determines "Yes" in the processings of steps S13B and S14B, and determines the display ranking of the "sukiyaki" group and the "mapo tofu" group (step S15B). At this timing, the number of products which belong to the "sukiyaki" group and are registered in the shopping cart 250 is one ("tofu" only) and the number of products which belong to the "mapo tofu" group and are registered in the shopping cart 250 is one ("tofu" only). That is, since the number of products is the same, the ranking is determined in accordance with the predetermined rule (for example, an ascending order of group IDs). However, when "Chinese cabbage" is already registered in the shopping cart 250, the ranking is determined so that the priority ranking of the "sukiyaki" group to which the two products, "Chinese cabbage" and "tofu" belong becomes higher.

Continuously, the system controller 14 obtains the belonged products for the "sukiyaki" group and the "mapo tofu" group (step S16B). That is, as the belonged products for the "sukiyaki" group, "beef", "Chinese cabbage", "green onion", "shirataki", "tofu", "garland chrysanthemum", and "onion" are obtained. Further, as the belonged products for the "mapo tofu" group, "green onion", "tofu", "pork", "broad bean chili paste (Chinese seasoning)", "garlic", and "ginger" are obtained.

Continuously, the system controller 14 checks a non-display group for the "sukiyaki" group and the "Chinese fiery hot tofu" group (step S17B). At this timing, since the product that is registered in the shopping cart 250 is only "tofu", none of the "sukiyaki" group and the "mapo tofu" group is the non-display group.

Continuously, the system controller 14 limits the belonged products to be displayed for the "sukiyaki" group and the "Chinese fiery hot tofu" group and obtains the limited belonged product information (step S18B). For the "sukiyaki" group, "tofu" that has been registered in the shopping cart 250 is removed from the belonged products including "beef", "Chinese cabbage", "green onion", "shirataki", "tofu", "garland chrysanthemum", and "onion" to limit the belonged products to be displayed to "beef", "Chinese cabbage", "green onion", "shirataki", "garland chrysanthemum", and "onion". Similarly, for the "mapo tofu" group, the belonged products to be displayed are limited to "green onion", "pork", "broad bean chili paste", "garlic", and "ginger" excluding "tofu". The system controller 14 obtains the belonged product information such as the sales price for the limited belonged products from the stock DB 123.

Continuously, the system controller 14 transmits the related product display data to the user terminal 2 (step S19B). Here, the related product display data to be transmitted is display data that displays the "sukiyaki" group above the "mapo tofu" group and also is data that displays the names of the "sukiyaki" group and the "mapo tofu" group and the belonged products that belong to the groups.

When the related product display data is received (step S14A: YES), the user terminal 2 updates the product selecting screen 200 as shown in Fig. 5 (step S15A).

Continuously, in the product selecting screen 200, a shopping cart button 212 corresponding to the "shirataki" is pressed. When the above operation is detected (step S11A: YES), the user terminal 2 registers the "shirataki" in the shopping cart 250 (step S12A) and transmits the registered product information including the product ID of the "shirataki" to the order reception server 1 (step S13A). When the registered product information is received (step S11B: YES), the system controller 14 of the order reception server 1 extracts a group to which the "shirataki" belongs (step S12B). Here, since the group to which the "shirataki" belongs is, as shown in Fig. 4, the "sukiyaki" group and the "simmered meat and potatoes" group, these two groups are extracted.

If the two groups are extracted, the system controller 14 determines "Yes" in the processings of steps S13B and S14B, and determines the display ranking of the "sukiyaki" group, the "mapo tofu" group, and the "simmered meat and potatoes" group (step S15B). At this timing, the number of products which belongs to the "sukiyaki" group and is registered in the shopping cart 250 is two ("tofu" and "shirataki"). The number of products which belong to the "mapo tofu" group and are registered in the shopping cart 250 is one ("tofu" only) and the number of products which belong to the "simmered meat and potatoes" group and are registered in the shopping cart 250 is one ("tofu" only). Therefore, the priority ranking of the "sukiyaki" group is the first. Further, since the number of the products of the "mapo tofu" group and the "simmered meat and potatoes" group is the same, the ranking of these groups are determined in accordance with the predetermined rule.

Continuously, the system controller 14 obtains belonged products for the "sukiyaki" group, the "mapo tofu" group, and the "simmered meat and potatoes" group (step S16B). However, the belonged products for the "sukiyaki" group and "mapo tofu" group are already obtained in the previous processing of step S16B, and the previous information is stored, so that the above processing may be omitted. Therefore, as the belonged products for the "simmered meat and potatoes" group, "shirataki", "onion", "pork", "potato", and "carrot" are obtained.

Continuously, the system controller 14 checks a non-display group for the "sukiyaki" group, the "Chinese fiery hot tofu" group, and the "simmered meat and potatoes" group (step S17B). At this time, since the products that are registered in the shopping cart 250 are only the "tofu" and the "shirataki", none of the "sukiyaki" group, the "mapo tofu" group, and the "simmered meat and potatoes" group is the non-display group.

Continuously, the system controller 14 limits the belonged products to be displayed for the "sukiyaki" group, the "Chinese fiery hot tofu" group, and the "simmered meat and potatoes" group and obtains the limited belonged product information (step S18B). For the "sukiyaki" group, the "tofu" and the "shirataki" that have been registered in the shopping cart 250 are removed from the belonged products including "beef", "Chinese cabbage" , "green onion", "shirataki", "tofu", "garland chrysanthemum", and "onion" to limit the belonged products to be displayed to "beef", "Chinese cabbage", "green onion", "garland chrysanthemum", and "onion". Similarly, for the "mapo tofu" group, the belonged products to be displayed are limited to "green onion", "pork", "broad bean chili paste", "garlic", and "ginger". Further, for the "simmered meat and potatoes" group, the belonged products to be displayed are limited to "onion", "pork", a "potato", and "carrot". The system controller 14 obtains the belonged product information for the limited belonged products from the stock DB 123. However, for the products whose belonged product information is already obtained in the previous processing of step S18B, since the previous information is stored, the above processing may be omitted.

Continuously, the system controller 14 transmits the related product display data to the user terminal 2 (step S19B). Here, the related product display data to be transmitted is display data that displays the "sukiyaki" group above the "mapo tofu" group, and the "simmered meat and potatoes" group and also is data that displays the names of the "sukiyaki" group, the "mapo tofu" group, and the "simmered meat and potatoes" group and the belonged products that belong to the groups.

When the related product display data is received (step S14A: YES), the user terminal 2 updates the product selecting screen 200 (step S15A). In this case, the user terminal 2 displays the group product display area 271 corresponding to the "sukiyaki" group above the group product display area 271 corresponding to the "mapo tofu" group and the group product display area 271 corresponding to the "simmered meat and potatoes" group.

As described above, in the group DB 24 of the order reception server 1 according to the present embodiment, with respect to the plurality of groups, a plurality of belonged products (products specified by the belonged product IDs) which belong to the groups and the group names are stored so as to be associated with each other. Further, whenever the customer (an example of a user) selects a product that is expected to be ordered as the order product (an example of an "order scheduled product") by pressing the shopping cart button 212, the system controller 14 receives the registered product information (an example of "order scheduled product information") indicating the selected order product from the user terminal, extracts a group to which the order product indicated by the received registered product information belongs from the groups registered in the group DB 124, and transmits the related product display data ("product display data") for displaying the belonged product and the name of the extracted group to the user terminal 2. The system controller 14 of the order reception server 1 according to the present embodiment may function as a receiving unit, an extracting unit, and a transmitting unit.

According to the order reception server 1 in the present embodiment, whenever the customer selects one order product, products that belong to the same group as the selected product may be displayed in the user terminal for every group together with the name of the group. Accordingly, when another product that belongs to the group is needed, the possibility that the customer forgets to purchase the product may be lowered. Usually, when the user orders a product, the user can maintain focus in respects to the ultimate usage and keep the purpose in mind. Therefore, when at least one product among the products required for the ultimate purpose is absent, the usage assumed by the user may be not achieved. Therefore, by suggesting a product that is not included in the shopping cart based on a group on the presumption of the ultimate purpose and usage, it is possible to prevent the user from forgetting to buy a product. Further, according to the present embodiment, whenever one product is registered in the shopping cart 250, the registered product information is transmitted. However, alternatively, whenever a predetermined number (for example, three) of products are registered in the shopping cart 250, the registered product information may be transmitted.

Specifically, if a user forgets to order a product from the shopping site, even though the product is separately ordered later, the product may be not delivered at the same time as the other products, which is inconvenient for the customer. Therefore, it is further necessary to prevent the user from forgetting to buy a product in the shopping site.

Even though the user does not forget to buy a product, when the user considers ordering another product that belongs to the group, it is possible to prevent the inconvenience of searching for the product to order the product individually. Further, a usage other than the usage that is assumed by the user may be suggested so as cope with change into the usage that is not assumed by the user, but is more preferable.

The related product display data according to the present embodiment is data for updating the product selecting screen so as to allow the customer to individually select a belonged product of a group (an example of a "product group"), which is displayed as the related product display data (an example of "product display data"), as an order product. Therefore, the customer does not need to buy the products in the unit of group, but may selectively buy only necessary products. Therefore, at this time, the customer does not need to order the unnecessary product (for example, if the customer wants to prepare the sukiyaki, even though an onion is included in the "sukiyaki" group, since the customer already has the onion, the user does not need to buy the onion) but may order another products that belong to the group.

Further, when a plurality of groups are extracted, the system controller 14 of the order reception server 1 according to the present embodiment (an example of an "extracting unit") determines the display ranking of the plurality of extracted groups in the order of a group having an additional of belonged products registered in the shopping cart 250. Further, the related product display data preferentially displays belonged products and a name of a group having higher display ranking.

It is considered that as the group includes more products registered in the shopping cart 250, the products that belong to the group are highly expected to be purchased by the user. According to the order reception server 1 in the present embodiment, the product that is highly expected to be purchased by the customer may be preferentially suggested, which improves the convenience of the customer.

Furthermore, the related product display data according to the present embodiment displays belonged products and a name of a group other than the group whose all belonged products are registered in the shopping cart 250. For example, in the above embodiment, when all products of "beef", "Chinese cabbage", "green onion", "shirataki", "tofu", "garland chrysanthemum", and "onion" which belong to the "sukiyaki" group are registered in the shopping cart 250, belonged products and group names of the "mapo tofu" group and the "simmered meat and potatoes" group other than the "sukiyaki" group are displayed on the user terminal by the related product display data to be displayed.

According to the order reception server 1 in the present embodiment, from the viewpoint of preventing from forgetting to buy, the products that belong to a group which is not required to be suggested to the customer are not suggested, which improves visibility of the product selecting screen in the user terminal.

A part of the group that is registered in the group DB 124 of the order reception server 1 according to the present embodiment is based on recipes. Therefore, the possibility for forgetting to buy products to be for cooking is low, which prevents the disadvantage in that the user cannot cook because of forgetting to buy products and thus the other materials are wasted.

According to the present embodiment, the products that are displayed in the product selecting screen and selected as an order product by a customer are products that are handled in the Internet shopping mall. In the Internet shopping mall, relatively cheap products such as fresh products are handled in large quantities, and a plurality of product groups which are related for one purpose and usage (for example, recipes) may be purchased at one time. According to the present embodiment, the customer may select a product while checking whether there is a product which is forgotten to be bought in the group of products that belongs to the group.

Further, when the belonging group is extracted in the order reception server 1 according to the present embodiment (step S12B), referring to the product belonging group DB 125 based on the product ID included in the received registered product information, the belonging group ID of a group to which at least one product specified by the product ID belongs is obtained. However, in step S12B, only the group having two or more belonged products may be extracted. It is considered that as the number of products to be included is increased, the group is highly expected to be purchased in the unit of group. Accordingly, since only a group having two or more belonged products is suggested, it is possible to prevent the user from being confused due to a complexity of the screen of the user terminal by suggesting a group which is less expected to be purchased in the unit of group.

### [5. Modified Embodiment]

In the above embodiment, even when any customer (member) registers a product in the shopping cart 250, the system controller 14 of the order reception server 1 is configured to extract a group to be displayed in the related product area 270 based on the group registered in the group DB 124 and the product belonging group DB 125. As a modified example of the above configuration, a group DB for member that associates a member ID (member) with a group ID (group) is further provided in the storage unit 12. When a group to be displayed in the related product area 270 is extracted, the group may be extracted based on only a group which is associated with a customer who registers a product in the shopping cart 250.

In the group DB for a member, the group ID that is associated with the member ID may be a group ID of a group that is registered in the group DB 124 or a group ID of a group that is created independently by the member. When the group ID of the group that is registered in the group DB 124 is registered so as to be associated with the member ID, a list of the groups that are registered in the group DB 124 in a group setting screen (not shown) is suggested to the members and the member may select a group to be displayed in the related product area 270.

When the group ID of the group that is created independently by the member is registered so as to be associated with the member ID, user creating group information indicating the groups created by the member and products that belong to the group is received from the user terminal 2. For example, in a group creating screen (not shown), the user is allowed to create a group in accordance with the behavioral characteristics (for example, a group consisting of cooking ingredients or a group consisting of products that are likely to be simultaneously purchased). The order reception server 1 receives user creation group information concerning the created group from the user terminal 2. When the user creation group information is received, the system controller 14 assigns a new group ID to the created group and then registers the group in the group DB 124. Further, the newly assigned group ID and the member ID are associated with each other to be registered in the group DB for a member. As described above, the system controller 14 functions as a group editing unit that associates the product group created by the customer (an example of a "user"), the belonged products that belong to the group, and the group name with the user identification information of the customer based on the received user creation group information to store the product group, the belonged products that belong to the group, and the group name in the group DB for a member (an example of a part of a "storage unit").

Here, an operational example of the system controller 14 of the order reception server 1 according to the modified embodiment will be described. In the processing of step S13B of Fig. 8, if it is determined that the belonging group is extracted (step S13B: YES), the system controller 14 continuously determines whether the extracted belonging group is registered in the member group DB. Specifically, the group ID is obtained by referring to the member group DB based on the member ID obtained for logging on. Then, it is determined whether the obtained group ID matches the group ID of the extracted belonging group. If the obtained group ID matches the group ID of the extracted belonging group, it is determined that the extracted belonging group is registered in the member group DB. Only when it is determined that the extracted belonging group is registered in the member group DB, the system controller 14 proceeds to the processing of step S15B. In contrast, if it is determined that extracted belonging group is not registered in the member group DB, the system controller 14 proceeds to the processing of step S20B.

According to the modified embodiment, the groups are associated in accordance with the member's own behavioral characteristics so that the products are suggested based on the groups that match member's behavioral characteristics. Further, the member creates a group in accordance with his/her own behavioral characteristics in advance, so as to prevent from forgetting to buy a product when a product corresponding to the group is purchased.

The order reception server 1 according to the modified embodiment is an order reception server of an Internet shopping site. In the Internet shopping mall, the user often purchases daily cooking ingredients while keeping the ultimate cooking method in mind. Therefore, when a group is suggested in accordance with the taste and life pattern of the member, it is very convenient for a user who is a member. In other words, for example, for a "curry" group, a "curry" group including a pork may be suggested to a user who likes the pork and a curry group including a beef may be suggested to a user who likes the beef.

Further, in the modified embodiment, when the member is logging on the Internet shopping site, it may be set whether the member desires to extract a group that is displayed in a related product area 270 only from the group selected by the member (or a group created by the member). Only when the setting is set to "desires", the system controller 14 applies the present modified embodiment.

Further, as another modified embodiment, a group that is displayed in the related product area 270 may be extracted from all groups registered in the group DB 124 and the group created by the customer (member). According to this modified embodiment, not only the groups registered in the group DB 124 but also the group created by the customer (member) may be displayed in the related product area 270. If there are products that are frequently purchased at the same time, the member creates a group including the products as belonged products, which allows the member to purchase the all products without omission when the products are simultaneously purchased. Further, for this modified embodiment, the member may select whether to apply the modified embodiment in accordance with the setting.

Finally, the present invention is not limited to the above-described embodiments. The above-described embodiments are illustrative and anything that has the substantially same configuration as the technical spirit described in the appended claims and same effects is included in the technical scope of the present invention. Therefore, for example, the products that are ordered by the order reception device according to the present invention are not limited to the products handled in the Internet shopping mall, but may be other products.

Further, the order scheduled product is not limited to a product that is scheduled to be ordered for purchasing, but includes a product that is requested and scheduled to be ordered for manufacturing or delivering such as a product that is scheduled to be ordered for rental.

In the present embodiment, the group DB 124 that is an example of a "storage unit" and a group DB for a member that is an example of a part of the "storage unit" are configured to be built in the storage unit 12 of the order reception server 1. However, instead of the above configuration, the databases are built in a storage unit other than the order reception server 1 (for example, a storage unit of a device to which the order reception server 1 is accessible) and the order reception server 1 appropriately accesses thereto.

### EXPLANATION OF REFERENCE NUMERALS

- 1: ORDER RECEIVING SERVER
- 11: COMMUNICATION UNIT
- 12: STORAGE UNIT
- 121: MEMBER DATABASE
- 122: STORE DATABASE
- 123: STOCK DATABASE
- 124: GROUP DATABASE
- 125: PRODUCT BELONGING GROUP DATABASE
- 126: ORDER RECEIVING DATABASE
- 13: INPUT/OUTPUT INTERFACE UNIT
- 14: SYSTEM CONTROL UNIT
- 15: SYSTEM BUS
- 2: USER TERMINAL
- 3: STORE TERMINAL
- NW: NETWORK
- S: ORDER RECEIVING SYSTEM

## Claims

1. A server apparatus that is connected to a terminal device via a network, the server apparatus comprising:
a receiving means that, whenever a user selects a predetermined number of products that are scheduled to be ordered as an order scheduled product, receives order scheduled product information indicating the selected order scheduled product from the terminal device;
an extracting means that refers to a storing means that stores a plurality of belonged products that belong to a product group so as to be associated with a group name for a plurality of product groups and extracts a product group to which the order scheduled products indicated by the received order scheduled product information belong from the product groups stored in the storing means; and
a transmitting means that transmits product display data displaying the belonged products and the group name of the extracted product group to the terminal device.

2. The server apparatus according to claim 1, wherein the product display data is a data that displays a screen which allows a user to individually select the belonged products of the product group to be displayed by the product display data as the order scheduled products.

3. The server apparatus according to claim 1 or 2, wherein the storing means further stores user identification information that identifies the user so as to be associated with the product group,
the receiving means receives the user identification information of a user who selects the order scheduled product indicated by the order scheduled product information from the terminal device, and
the extracting means refers to the storing means and extracts the product group that is associated with the user identification information received by the receiving means.

4. The server apparatus according to claim 3, wherein the receiving means further receives user creation group information indicating the belonged products and the group name of the product group as the user creation group information concerning product group created by the user from the terminal device, and
the server apparatus further comprises a group editing means that allows the product group created by the user, the belonged products that belong to the group, and the group name to be associated with the user identification information of the user and stores in the storing means, based on the user creation group information received by the receiving means.

5. The server apparatus according to any one of claims 1 to 4, wherein when the plurality of product groups are extracted, the extracting means determines the display ranking of the groups in the order of groups having larger number of the belonged products that matches with the order scheduled products, and
the product display data is data that preferentially displays the belonged products and the group name of the product group having higher display ranking.

6. The server apparatus according to any one of claims 1 to 5, wherein the product display data is data that displays the belonged products and the group name of a product group other than the product group whose all belonged products are selected as the order scheduled products.

7. The server apparatus according to any one of claims 1 to 6, wherein the product groups are product groups based on recipes.

8. The server apparatus according to any one of claims 1 to 7, wherein the products that are selected by the user as the order scheduled products are products which are handled in an Internet shopping mall.

9. A product display method comprising:
a step of , at a computer, whenever a user selects a predetermined number of order scheduled products that are scheduled to be ordered, receiving order scheduled product information indicating the selected order scheduled product from the terminal device connected via a network;
a step of, at a computer, referring to a storing means that stores a plurality of belonged products that belong to a product group so as to be associated with a group name for a plurality of product groups and extract a product group to which the order scheduled products indicated by the received order scheduled product information from the product groups stored in the storing means; and
a step of ,at a computer, transmitting product display data displaying the belonged products and the group name of the extracted product group to the terminal device.

10. A product display program causing a computer to function as:
a receiving means that, whenever a user selects a predetermined number of order scheduled products that are scheduled to be ordered, receives order scheduled product information indicating the selected order scheduled product from a terminal device connected via a network;
an extracting means that refers to a storing means that stores a plurality of belonged products that belong to a product group so as to be associated with a group name for a plurality of product groups and extracts a product group to which the order scheduled products indicated by the received order scheduled product information belong from the product groups stored in the storing means; and
a transmitting means that transmits product display data displaying the belonged products and the group name of the extracted product group to the terminal device.

11. A recording medium with a computer-readable product display program recorded thereon which causes a computer to function as:
a receiving means that, whenever a user selects a predetermined number of order scheduled products that are scheduled to be ordered, receives order scheduled product information indicating the selected order scheduled product from a terminal device connected via a network;
an extracting means that refers to a storing means that stores a plurality of belonged products that belong to a product group so as to be associated with a group name for a plurality of product groups and extracts a product group to which the order scheduled products indicated by the received order scheduled product information belong from the product groups stored in the storing means; and
a transmitting means that transmits product display data displaying the belonged products and the group name of the extracted product group to the terminal device.

12. A product display system comprising:
a terminal device; and
a server apparatus connected with the terminal device via a network,
wherein the server apparatus comprises:
a receiving means that, whenever a user selects a predetermined number of products that are scheduled to be ordered as an order scheduled product, receives order scheduled product information indicating the selected order scheduled product from the terminal device;
an extracting means that refers to a storing means that stores a plurality of belonged products that belong to a product group so as to be associated with a group name for a plurality of product groups and extracts a product group to which the order scheduled products indicated by the received order scheduled product information belong from the product groups stored in the storing means; and
a transmitting means that transmits product display data displaying the belonged products and the group name of the extracted product group to the terminal device, and
the terminal device comprises:
an order scheduled product information transmitting means that transmits the order scheduled product information to the server apparatus whenever the user selects a predetermined number of order scheduled products;
a product display data receiving means that receives the product display data from the server apparatus; and
a displaying means that displays belonged products and the group name of the product group specified by the received product display data on a display unit.
